# EUROPÄISCHE PATENTSCHRIFT

(11) **EP 1 288 082 B1**
(45) Veröffentlichungstag und Bekanntmachung des Hinweises auf die Patenterteilung: **12.10.2005**
(21) Anmeldenummer: 02017689.7
(22) Anmeldetag: 07.08.2002
(51) Int. Cl.: B60R 21/20, B62D 1/04

(54) **Gassackmodul**
Airbag module
Module de coussin gonflable

(30) Priorität: 31.08.2001 DE 20114375 U
(43) Veröffentlichungstag der Anmeldung: 05.03.2003
(73) Patentinhaber: TRW Automotive Safety Systems GmbH, 63743 Aschaffenburg (DE)
(72) Erfinder: Keutz, Markus, 64380 Rossdorf (DE); Lorenz, Christian, 63849 Leidersbach (DE)
(74) Vertreter: Kitzhofer, Thomas

(56) Entgegenhaltungen:
- US-A- 5 004 266
- US-A- 5 865 466
- US-B1- 6 206 409

## Beschreibung

Die Erfindung betrifft ein Gassackmodul mit einem Gehäuse und einem im Gehäuse angeordneten, wenigstens abschnittsweise zu einem Paket gefalteten Gassack.

Unter einer Verkleidung verborgene Gassäcke, sei es im Lenkrad, in der Instrumententafel oder in einem Fahrzeugsitz, gehören mittlerweile zur Standardausstattung eines Personenfahrzeugs. Der Gassack ist in einem Gassackmodul angeordnet und verläßt dieses bei der Aktivierung im allgemeinen senkrecht zu der Oberfläche, unter der er verborgen ist. Diese Oberflächen müssen daher Klappen oder Aufreißlinien aufweisen (siehe z.B. US 6206 409 B1), die möglichst nicht von außen sichtbar sein sollen. Diese Kaschierung der Klappen und Aufreißlinien erhöht die Herstellungskosten des Fahrzeugs. Außerdem wird durch die herkömmliche Austrittsrichtung des Gassacks gerade im Lenkrad die Anordnung von Bedien- und Anzeigeelementen im dafür prädestinierten Bereich der Lenkradnabe erschwert.

Das erfindungsgemäße Gassackmodul mit einem Gehäuse und einem im Gehäuse angeordneten, wenigstens abschnittsweise zu einem Paket gefalteten Gassack erhöht den Komfort und die Sicherheit eines Fahrzeuginsassen, indem es eine Umlenkeinrichtung für das Gassackpaket aufweist, wobei die Umlenkeinrichtung, das Gehäuse und das Paket so aufeinander abgestimmt sind, daß das gefaltete Paket das Gehäuse in einer ersten Richtung verläßt und durch die Umlenkeinrichtung um einen vorbestimmten Winkel umgelenkt wird. Durch diese Einrichtung kann der Austritt des Gassackpakets aus dem Gehäuse in einer beliebigen, geeigneten Richtung erfolgen, da das Paket erst nach dem Austritt in die für den Gassack vorgesehene Entfaltungsrichtung umgelenkt wird. Die Erfindung erlaubt außerdem, die Entfaltungsrichtung optimal auf den vorgesehenen Einsatzzweck des Gassacks abzustimmen, indem der vorbestimmte Winkel entsprechend gewählt wird.

Vorteilhaft erfolgt die Umlenkung vollständig vor dem Entfalten des zum Paket gefalteten Gassackabschnitts. Der Gassack wird also nicht während des Entfaltens in seiner Entfaltungsrichtung beeinflußt, sondern wird, als Paket gefaltet, zunächst in seine Entfaltungsrichtung gebracht und dann ohne weitere Beeinflussung in dieser Entfaltungsrichtung entfaltet.

Bevorzugt beträgt der Umlenkwinkel etwa 90 Grad. Die erlaubt es, das Gassackpaket seitlich statt bisher senkrecht zur Oberfläche aus einem Gehäuse austreten zu lassen und ihn dann in die bisherige vorgesehene Entfaltungsrichtung umzulenken.

In einer bevorzugten Ausführungsform der Erfindung ist die Umlenkeinrichtung am Gassack und am Gassackmodul befestigt. Bevorzugt ist die Umlenkeinrichtung ein, bezogen auf den nicht aktivierten Zustand, im Inneren des Gassackmoduls vorgesehenes Rückhaltemittel. In einer bevorzugten Ausführungsform der Erfindung enthält die Umlenkeinrichtung mehrere Fangbänder, in einer weiteren bevorzugten Ausführungsform enthält die Umlenkeinrichtung einen Gewebeschlauch. Eine flexible Umlenkeinrichtung wie ein Fangband oder ein Gewebeschlauch kann problemlos und ohne wesentliche Erhöhung des Platzbedarfs zusammen mit dem Gassackpaket im Gehäuse angeordnet sein, wo sie vor Beschädigung und Verschmutzung geschützt ist.

Es können auch mehrere Rückhaltemittel vorgesehen sein, die an unterschiedlichen Stellen am Paket angreifen und die die Stellen des Pakets im ausgetretenen Zustand unterschiedlich nahe am Modul halten, um eine Umlenkung zu erreichen. So läßt sich eine wenig aufwendige, einfach an verschiedene Gegebenheiten anpaßbare Umlenkeinrichtung schaffen.

Vorteilhaft kann das Gehäuse durch eine Klappe verschlossen sein, wobei das aus dem Gehäuse austretende Paket die Klappe öffnet.

Bevorzugt bewirkt der Gasdruck des von einem Gasgenerator zur Befüllung des Gassacks freigesetzten Gases die Verschiebung des Pakets aus dem Gehäuse und die Umlenkung des Pakets. Dies erlaubt es, auf weitere Antriebsmittel zur Umlenkung des Pakets zu verzichten, was Platzbedarf und Kosten reduziert.

Um das Paket so lange zusammenzuhalten, bis es nach der Umlenkung in seiner gewünschten Entfaltungslage ist, ist das Paket bevorzugt von einer durch geringe Krafteinwirkung zu öffnenden Hülle umgeben. Die Hülle hält das Paket nur so lange zusammen, bis die Umlenkung abgeschlossen ist, und wird dann durch den sich entfaltenden Gassack geöffnet.

Die Erfindung betrifft weiterhin ein Lenkrad mit einem Gassackmodul, wobei bevorzugt ist, daß das Paket in einer Richtung in etwa radial zur Lenkradachse aus dem Gehäuse austritt und in etwa in Richtung der Lenkradachse zum Fahrzeuginnenraum hin umgelenkt wird. Hierdurch wird erreicht, daß der Gassack sich in der gleichen Richtung entfaltet wie bei herkömmlichen Systemen, während alle Probleme, die mit einer im Bereich einer Lenkradnabe angeordneten Gassackklappe verbunden sind, vermieden werden.

Weitere Merkmale und Vorteile der Erfindung ergeben sich aus der nachfolgenden Beschreibung eines Ausführungsbeispiels in Verbindung mit der beigefügten Zeichnung.

Die einzige Figur zeigt einen schematischen Schnitt durch ein Lenkrad mit einem erfindungsgemäßen Gassackmodul zu verschiedenen Zeitpunkten.

Ein Lenkrad 10, dessen Lenkradkranz 12 schematisch dargestellt ist, weist ein im Bereich seiner Nabe angeordnetes Gassackmodul 14 auf. Das Gassackmodul 14 enthält ein Gehäuse 16 und einen Gasgenerator 18, der seitlich im Gehäuse angeordnet ist. Vor einer Aktivierung des Gassackmoduls 14 ist ein Gassack 20, der entweder ganz oder vollständig zu einem Paket 22 gefaltet ist, im Inneren des Gehäuses 16 angeordnet (Position A). Das Paket 22 ist von einer Hülle 24 umgeben, die durch geringe Kräfte geöffnet werden kann. Die Hülle 24 dient dazu, das Paket 22 bis zu dem Zeitpunkt zusammenzuhalten, zu dem eine Entfaltung des Gassacks 20 erwünscht ist. Das Gehäuse 16 ist vor der Aktivierung des Gassackmoduls 14 durch eine seitliche Klappe 26 verschlossen.

Das Gassackpaket 22 ist mit einer Umlenkeinrichtung 28 verbunden. Die Umlenkeinrichtung enthält ein Rückhaltemittel, in diesem Fall ein Gewebeschlauch 30. Der Gewebeschlauch 30 ist einerseits gasdicht am Gassack 20 befestigt und andererseits gasdicht mit dem Gehäuse 16 verbunden. Die Befestigung am Gassack ist in der Figur durch erste oberste und unterste Befestigungspunkte 32 und die Befestigung am Gehäuse durch zweite Befestigungspunkte 34, 34' dargestellt, wobei aber die Befestigungen vorzugsweise längs des geschlossenen Umfangs des Schlauches an seinen beiden Enden verlaufen. Die Entfernung der zweiten Befestigungspunkte 34, 34' von der Gehäuseöffnung 36, durch die das Paket 22 austritt, variiert über den Umfang des Gewebeschlauchs 30. Im hier dargestellten Fall ist der oberste Befestigungspunkt 34' weiter von der Öffnung 36 zurückgesetzt als der untere Befestigungspunkt 34, der an der entgegengesetzten Gehäuseseite liegt. Am anderen Ende des Gewebeschlauchs 30 ist dieser an der Rückseite des Pakets 22 befestigt (Befestigungspunkte 32).

Vor der Aktivierung des Gassackmoduls ist der Gewebeschlauch 30 entlang des Pakets 22 im Inneren des Gehäuses 16 angeordnet. Im unteren Bereich des Gewebeschlauches ist dieser am Rand der Gehäuseöffnung 36, im oberen Bereich nahe der Rückseite des Pakets 22 am Gehäuse 16 befestigt.

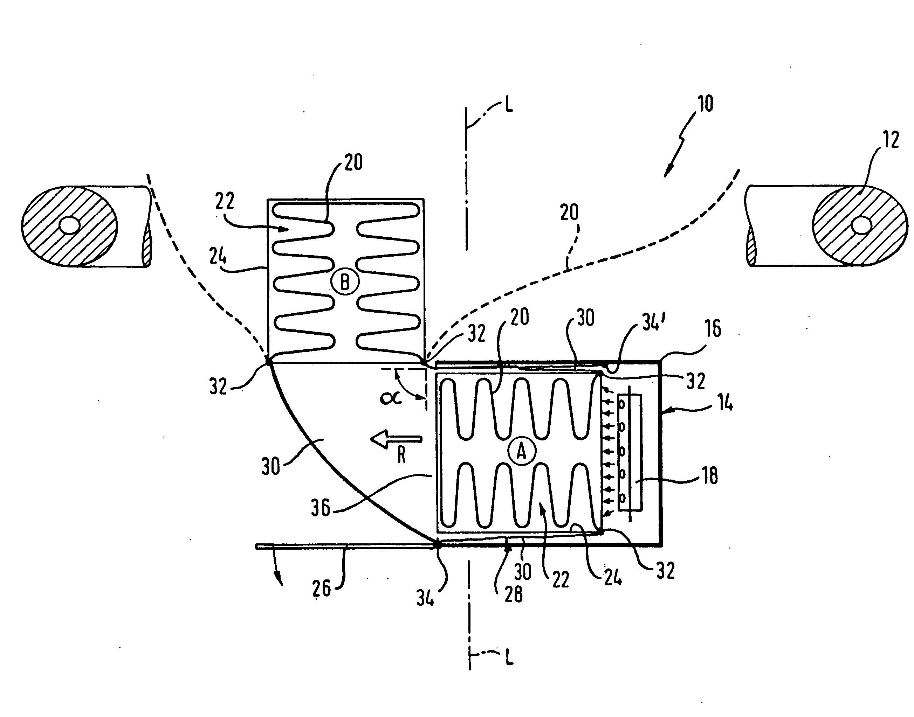

Bei der Aktivierung des Gassackmoduls 14 beziehungsweise des Gasgenerators 18 drückt der auf das Paket 22 wirkende Gasdruck des vom Gasgenerator 18 erzeugten Gases das Paket 22 gegen die noch geschlossene Klappe 26. Die Klappe 26 öffnet sich und schwenkt zur Seite, wie in Figur 1 zu sehen ist, woraufhin das Gassackpaket 22 im noch gefalteten Zustand und von der Hülle 24 umgeben in einer ersten Richtung R aus dem Gehäuse 16 hinausgeschoben wird. Der hierzu notwendige Bewegungsspielraum wird durch die Verschiebung/Entfaltung des Gewebeschlauchs 30 zur Verfügung gestellt. Der Gewebeschlauch 30 ist vorzugsweise aus einem gasdichten Material gefertigt, so daß der gesamte Gasdruck des Gasgenerators 18 auf das Gassackpaket 22 wirken kann.

Die Austrittsrichtung R liegt radial zur Lenkradachse L, so daß die Klappe verglichen mit der Abdeckkappe eines herkömmlichen Gassackmoduls um 90° seitlich versetzt angeordnet ist.

Die ersten Befestigungspunkte 32, die zweiten Befestigungspunkte 34, 34' sowie die Länge des Gehäuses 16 sind so aufeinander abgestimmt, daß sich der Gewebeschlauch 30 nicht geradlinig in Richtung R verschiebt/entfaltet, sondern die ersten Befestigungspunkte 32 Positionen haben, die unterschiedlich weit vom Gehäuse 16 entfernt liegen (Position B). Das aus dem Gehäuse 16 austretende Gassackpaket 22 wird dabei um den Winkel α, der hier in etwa 90° beträgt, umgelenkt. Der Gassack 20 befindet sich jetzt in einer Position, in der seine Entfaltungsrichtung in etwa parallel zur Lenkradachse in einem Fahrzeuginnenraum liegt.

Die Bewegung des Gassackpakets 22 entlang seines Umlenkwegs ist abgeschlossen, wenn der Gewebeschlauch 30 zu seiner vollen Länge ausgefahren ist. Die ersten Befestigungspunkte 32 werden dann in der Position B durch den Gewebeschlauch 30 gehalten. Der Gasdruck, der zuvor die Umlenkung des Pakets 22 bewirkt hat, bewirkt nun eine Befüllung des Gassacks 20 über den Gewebeschlauch 30, wodurch sich die Hülle 24 öffnet und sich der Gassack entfalten kann.

Alternativ kann statt des Gewebeschlauchs eine Fangbandstruktur mit mehreren Fangbändern vorgesehen sein, die analog zum Gewebeschlauch 30 befestigt sind. In diesem Fall ist nicht der gesamte Gassack 20 zu einem Paket 22 gefaltet, sondern ein Abschnitt, dessen Länge dem erwünschten Verschiebungsweg, der durch die Fangbänder vorgegeben ist, entspricht, entfaltet sich bereits während der Umlenkung des Pakets.

Es ist auch möglich, einen starren, bevorzugt gekrümmten Führungskanal vorzusehen, der zum Beispiel aus dem Gehäuse ausgefahren wird, um das Gassackpaket umzulenken.

Ebenso wäre es denkbar, die Umlenkeinrichtung nicht im Gehäuse, sondern, zum Beispiel bei Beifahrergassackmodulen oder im Fahrzeugsitz angeordneten Gassackmodulen, vor dem Gehäuse in der Fahrzeugstruktur anzuordnen.

## Patentansprüche

1. Gassackmodul mit einem Gehäuse (16) und einem im Gehäuse (16) angeordneten, wenigstens abschnittsweise zu einem Paket (22) gefalteten Gassack (20), wobei eine Umlenkeinrichtung (28) für das Paket (22) vorgesehen ist und wobei die Umlenkeinrichtung (28), das Gehäuse (16) und das Paket (22) so aufeinander abgestimmt sind, daß das gefaltete Paket (22) das Gehäuse (16) in einer ersten Richtung (R) verläßt und durch die Umlenkeinrichtung (28) um einen vorbestimmten Winkel (α) umgelenkt wird.

2. Gassackmodul nach Anspruch 1, **dadurch gekennzeichnet, daß** die Umlenkung vollständig vor dem Entfalten des zum Paket (22) gefalteten Gassackabschnitts erfolgt.

3. Gassackmodul nach einem der vorhergehenden Ansprüche, **dadurch gekennzeichnet, daß** der Winkel (α) etwa 90° beträgt.

4. Gassackmodul nach einem der vorhergehenden Ansprüche, **dadurch gekennzeichnet, daß** die Umlenkeinrichtung (28) am Gassack (20) und am Modul (14) befestigt ist.

5. Gassackmodul nach einem der vorhergehenden Ansprüche, **dadurch gekennzeichnet, daß** die Umlenkeinrichtung (28) ein, bezogen auf den nicht aktivierten Zustand, im Inneren des Moduls (14) vorgesehenes Rückhaltemittel (30) ist.

6. Gassackmodul nach einem der vorhergehenden Ansprüche, **dadurch gekennzeichnet, daß** mehrere Rückhaltemittel vorgesehen sind, die an unterschiedlichen Befestigungspunkten (32) am Paket angreifen und die die Befestigungspunkte (32) des Pakets (22) im ausgetretenen Zustand unterschiedlich nahe am Modul (14) halten, um eine Umlenkung zu erreichen.

7. Gassackmodul nach einem der vorhergehenden Ansprüche, **dadurch gekennzeichnet, daß** die Umlenkeinrichtung (28) mehrere Fangbänder enthält.

8. Gassackmodul nach einem der Ansprüche 1 bis 6, **dadurch gekennzeichnet, daß** die Umlenkeinrichtung (28) einen Kanal, vorzugsweise aus einem Gewebeschlauch (30), enthält.

9. Gassackmodul nach einem der vorhergehenden Ansprüche, **dadurch gekennzeichnet, daß** das Gehäuse (16) durch eine Klappe (26) verschlossen ist und daß das aus dem Gehäuse (16) austretende Paket (22) die Klappe (26) öffnet.

10. Gassackmodul nach einem der vorhergehenden Ansprüche, **dadurch gekennzeichnet, daß** der Gasdruck des von einem Gasgenerator (18) zur Befüllung des Gassacks (20) freigesetzten Gases die Verschiebung des Pakets (22) aus dem Gehäuse (16) bewirkt.

11. Gassackmodul nach einem der vorhergehenden Ansprüche, **dadurch gekennzeichnet, daß** das Paket (22) vor der Entfaltung des Gassacks (20) von einer durch geringe Krafteinwirkung zu öffnende Hülle (24) umgeben ist.

12. Gassackmodul nach einem der vorhergehenden Ansprüche, **dadurch gekennzeichnet, daß** durch die Umlenkeinrichtung (28) nach erfolgter Umlenkung des Pakets (22) der Gassack (20) aufgeblasen wird.

13. Lenkrad mit einem Gassackmodul nach einem der vorhergehenden Ansprüche.

14. Lenkrad nach Anspruch 13, **dadurch gekennzeichnet, daß** das Paket (22) in einer Richtung in etwa radial zur Lenkradachse (L) aus dem Gehäuse (16) austritt und in etwa in Richtung der Lenkradachse (L) zum Fahrzeuginnenraum hin umgelenkt wird.

## Claims

1. An airbag module comprising a housing (16) and an airbag (20) that is arranged in the housing (16) and, at least in sections, folded into a package (22), a deflection means (28) being provided for the package (22) and the deflection means (28), the housing (16) and the package (22) being coordinated with each other in such a way that the folded package (22) emerges from the housing (16) in a first direction (R) and is deflected by means of the deflection means (28) by a predefined angle (α).

2. The airbag module according to claim 1, **characterized in that** the deflection takes place entirely before the unfolding of the airbag section that has been folded into the package (22).

3. The airbag module according to either of the preceding claims, **characterized in that** the angle (α) is about 90°.

4. The airbag module according to any of the preceding claims, **characterized in that** the deflection means (28) is attached to the airbag (20) and to the module (14).

5. The airbag module according to any of the preceding claims, **characterized in that** the deflection means (28) is a restraint means (30) provided inside the module (14) as related to the non-activated state.

6. The airbag module according to any of the preceding claims, **characterized in that** several restraint means are provided that engage the package at various attachment points (32) and that hold the attachment points (32) of the package (22) in the emerged state at differing distances from the module (14) in order to bring about a deflection.

7. The airbag module according to any of the preceding claims, **characterized in that** the deflection means (28) includes several tethers.

8. The airbag module according to any of claims 1 to 6, **characterized in that** the deflection means (28) includes a channel, preferably made up of a fabric hose (30).

9. The airbag module according to any of the preceding claims, **characterized in that** the housing (16) is closed off by a flap (26) and **in that** the package (22) emerging from the housing (16) opens the flap (26).

10. The airbag module according to any of the preceding claims, **characterized in that** the pressure of the gas released by a gas generator (18) for filling the airbag (20) causes to move the package (22) out of the housing (16).

11. The airbag module according to any of the preceding claims, **characterized in that**, before the unfolding of the airbag (20), the package (22) is surrounded by a sleeve (24) that can be opened by the action of a small force.

12. The airbag module according to any of the preceding claims, **characterized in that** the airbag (20) is inflated through the deflection means (28) after the deflection of the package (22) has been completed.

13. A steering wheel comprising an airbag module according to any of the preceding claims.

14. The steering wheel according to claim 13, **characterized in that** the package (22) emerges from the housing (16) in a direction approximately radially to the steering wheel axis (L) and is deflected approximately in the direction of the steering wheel axis (L) towards the vehicle interior.

## Revendications

1. Module de coussin à gaz comportant un boîtier (16) et un coussin à gaz (20) agencé dans le boîtier (16) et plié pour former un paquet (22), au moins par tronçons, un dispositif de déviation (28) étant prévu pour le paquet (22), et le dispositif de déviation (28), le boîtier (16) et le paquet (22) étant adaptés les uns aux autres de telle sorte que le paquet (22) plié quitte le boîtier (16) dans une première direction (R) et est dévié d'un angle (α) prédéterminé par le le dispositif de déviation (28).

2. Module de coussin à gaz selon la revendication 1, **caractérisé en ce que** la déviation a lieu entièrement avant le dépliage du tronçon de coussin à gaz plié pour former le paquet (22).

3. Module de coussin à gaz selon l'une des revendications précédentes, **caractérisé en ce que** l'angle (α) est d'approximativement 90°.

4. Module de coussin à gaz selon l'une des revendications précédentes, **caractérisé en ce que** le dispositif de déviation (28) est fixé sur le coussin à gaz (20) et sur le module (14).

5. Module de coussin à gaz selon l'une des revendications précédentes, **caractérisé en ce que** le dispositif de déviation (28) est un moyen de retenue prévu à l'intérieur du module (14), en relation avec l'état non activé.

6. Module de coussin à gaz selon l'une des revendications précédentes, **caractérisé en ce qu'**il est prévu plusieurs moyens de retenue qui s'engagent sur le paquet en différents points de fixation (32) et qui retiennent les points de fixation (32) du paquet (22) à l'état sorti, à différentes distances du module (14), pour parvenir à une déviation.

7. Module de coussin à gaz selon l'une des revendications précédentes, **caractérisé en ce que** le dispositif de déviation (28) contient plusieurs bandes de garde.

8. Module de coussin à gaz selon l'une des revendications 1 à 6, **caractérisé en ce que** le dispositif de déviation (28) contient un canal, de préférence un tuyau en tissu (30).

9. Module de coussin à gaz selon l'une des revendications précédentes, **caractérisé en ce que** le boîtier (16) est fermé par un clapet (26) et **en ce que** le paquet (22) sortant hors du boîtier (16) ouvre le clapet (26).

10. Module de coussin à gaz selon l'une des revendications précédentes, **caractérisé en ce que** la pression de gaz du gaz libéré par un générateur de gaz (18) pour remplir le coussin à gaz (20) a pour effet le déplacement du paquet (22) hors du boîtier (16).

11. Module de coussin à gaz selon l'une des revendications précédentes, **caractérisé en ce qu'**avant le déploiement du coussin à gaz (20), le paquet (22) est entouré par une enveloppe (24) à ouvrir par l'action d'une faible force.

12. Module de coussin à gaz selon l'une des revendications précédentes, **caractérisé en ce que** le coussin à gaz (20) est gonflé par le dispositif de déviation (28) après que la déviation du paquet (2) ait eu lieu.

13. Volant de direction comportant un module de coussin à gaz selon l'une des revendications précédentes.

14. Volant de direction selon la revendication 13, **caractérisé en ce que** le paquet (22) sort du boîtier (16) dans une direction approximativement radiale par rapport à l'axe de volant de direction (L) et est dévié vers l'habitacle du véhicule approximativement en direction de l'axe du volant de volant de direction (L).
